# EUROPÄISCHE PATENTSCHRIFT

(11) **EP 1 082 551 B1**
(45) Veröffentlichungstag und Bekanntmachung des Hinweises auf die Patenterteilung: **27.11.2002**
(21) Anmeldenummer: 99955313.4
(22) Anmeldetag: 12.05.1999
(51) Int. Cl.: F16D 65/14

(54) **AKTUATORENBAUGRUPPE FÜR EINE FAHRZEUGBREMSE UND FAHRZEUGBREMSE MIT EINER DERARTIGEN AKTUATORENBAUGRUPPE**
ACTUATOR MODULE FOR A VEHICLE BRAKE AND VEHICLE BRAKE WITH SUCH AN ACTUATOR MODULE
BLOC D'ACTIONNEURS POUR FREIN DE VEHICULE ET FREIN DE VEHICULE EQUIPE D'UN BLOC D'ACTIONNEURS DE CE TYPE

(30) Priorität: 03.06.1998 DE 19824771
(43) Veröffentlichungstag der Anmeldung: 14.03.2001
(73) Patentinhaber: LUCAS INDUSTRIES PUBLIC LIMITED COMPANY, Solihull B90 4LA (GB)
(72) Erfinder: MOHR, Kurt, D-56283 Halsenbach (DE); FRANZ, Siegfried, D-56077 Koblenz (DE)
(74) Vertreter: Schmidt, Steffen J., Dipl.-Ing.
(86) Internationale Anmeldenummer: EP9903274
(87) Internationale Veröffentlichungsnummer: WO99063243

(56) Entgegenhaltungen:
- FR-A- 2 584 466
- GB-A- 2 098 682

## Beschreibung

Die Erfindung betrifft eine Aktuatorenbaugruppe für eine Fahrzeugbremse sowie eine Fahrzeugbremse mit einer derartigen Aktuatorenbaugruppe.

Im Bereich der Fahrzeugbremsen umfaßt eine Bremsausrüstung im allgemeinen eine Betriebs-Bremsanlage und eine Feststell-Bremsanlage.

Weiterhin ist üblicherweise jedes Fahrzeugrad mit einer Bremse versehen, die eine scheiben- oder trommelförmige Reibfläche sowie ein Reibelement und einen Aktuator umfaßt, der das Reibelement bei Betätigung der Bremse gegen die Reibfläche preßt. Im folgenden wird die den Aktuator und das Reibelement umfassende Baugruppe als "Aktuatorenbaugruppe" bezeichnet.

In einem Kraftfahrzeug setzen die Betriebs- und die Feststell-Bremsanlage im allgemeinen eine gemeinsame Bremse ein, wohingegen, deren Betätigungs- und Übertragungseinrichtungen getrennt vorhanden sind. Dies ist aus Sicherheitsgründen und aufgrund gesetzlicher Vorschriften erforderlich.

Die Betätigung der Aktuatorenbaugruppe für eine Betriebsbremsfunktion erfolgt dabei in der Regel durch die Pedalkraft und eine Hilfskraft, wobei zur Erzeugung der Hilfskraft vornehmlich pneumatische (Vakuum, Druckluft), hydraulische und auch elektrische Energie angewendet wird. Im Gegensatz dazu wird die Feststell-Bremsanlage im allgemeinen manuell, mit der Hand oder dem Fuß betätigt und in diesem Zustand mechanisch gehalten.

Ziel neueren Entwicklungen von Fahrzeugbremsen ist es, auch die Feststellbremsfunktion mittels einer Hilfsenergie, wie z.B. elektrische Energie, auszuführen, um eine Vereinfachung der Bremsanlage zu erzielen. Außerdem wird angestrebt, das Bauvolumen und das Gewicht der Bremse am Rad zu minimieren um die ungefederte Masse des Kraftfahrzeuges möglichst gering zu halten.

Bei bekannten Fahrzeugbremsen wird die Haltekraft für eine Feststellbremsfunktion mittels Hilfs- oder Fremdenergie direkt durch einen Antrieb der Aktuatorenbaugruppe aufgebracht. Dabei sind Arretier- und Notlöseeinrichtungen erforderlich, damit bei Ausfall der Energieversorgung des Antriebs, z.B. Stromversorgung eines Elektromotors, die Feststellbremse zunächst arretiert bleibt und bedarfsweise gelöst werden kann. Solche Einrichtungen sind aufwendig und erfordern zum Teil einen erheblichen Energiebedarf des Antriebs.

Aus WO 98/01682 A1 des Anmelders ist eine Aktuatorenbaugruppe bekannt, bei der ein Antrieb über eine Kniehebelanordnung ein Reibelement der Fahrzeugbremse bewegen kann. Durch Einleiten einer zusätzlichen Eingangskraft in die Kniehebelanordnung kann diese Aktuatorenbaugruppe auch die Funktion einer Feststellbremse ausführen. Es erweist sich dabei jedoch als problematisch, daß während der Betätigung der Feststellbremse eine permanente, sehr hohe Haltekraft aufzubringen ist.

Der Erfindung liegt daher die Aufgabe zugrunde, eine Aktuatorenbaugruppe für eine Fahrzeugbremse bereitzustellen, die diese Nachteile nicht aufweist. Diese Aufgabe wird durch die in Anspruch 1 angegebene Aktuatorenbaugruppe gelöst. Vorteilhafte Ausgestaltungen sind Gegenstand von Unteransprüchen. Weitere Merkmale, Vorteile und Eigenschaften der Erfindung werden anhand der nachstehenden Beschreibung unter Bezugnahme auf die Zeichnungen erläutert.
- Fig. 1: zeigt eine Ausführungsform einer erfindungsgemäßen Aktuatorenbaugruppe in einer seitlichen teilweisen Schnittansicht, mit einer Hebelanordnung in der Stellung eines Betriebsbremsbereiches.
- Fig. 2: zeigt eine Aktuatorenbaugruppe gemäß Fig. 1, mit der Hebelanordnung in der Stellung einer Feststellbrems-position.

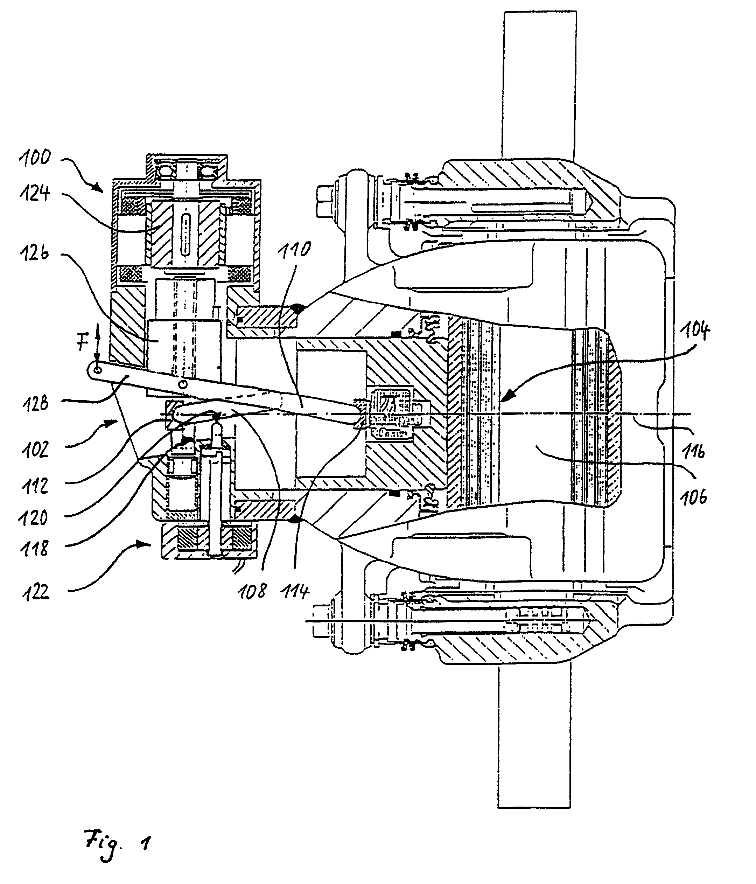

In Fig. 1 ist eine Ausführungsform einer erfindungsgemäßen Aktuatorenbaugruppe mit einem Antrieb 100 dargestellt, der mit einer Eingangsseite einer Hebelanordnung 102 verbunden ist, welche eine eingeleitete Antriebskraft auf ein Reibelement 104 überträgt, das dadurch an eine Bremsscheibe 106 gepreßt wird.

Für die Ausführung des erfindungsgemäßen Gedankens eignet sich besonders die gezeigte Hebelanordnung mit zwei Armen 108 und 110, von denen der erste Arm 108 halb so lang wie der zweite Arm 110 ist. Der erste Arm 108 ist an seinem ersten Ende in der Mitte des zweiten Armes 110 mit diesem gelenkig verbunden und mit seinem zweiten Ende in einem Festlager 112 abgestützt. Der zweite Arm 110 ist an seinem ersten Ende über ein Loslager 114 mit dem axial verschiebbaren Reibelement 104 verbunden und an seinem zweiten Ende durch den Antrieb 100 wahlweise mit einer in Richtung auf das Festlager 112 wirkenden Kraft belastet. Mit dieser besonders vorteilhaften Ausgestaltung wird eine querkraftfreie Belastung sowohl des Antriebes 100 als auch des Festlagers 112 und des Loslagers 114 des Reibelementes 104 erreicht.

Die Hebelanordnung 102 ist im in Fig. 1 dargestellten Zustand selbstlösend. Bei Reduzierung der eingeleiteten Kraft wird also das Reibelement 104 aufgrund seiner Vorspannung zurückgeführt, ohne daß diese Bewegung durch die Hebelanordnung 102 gehemmt wird.

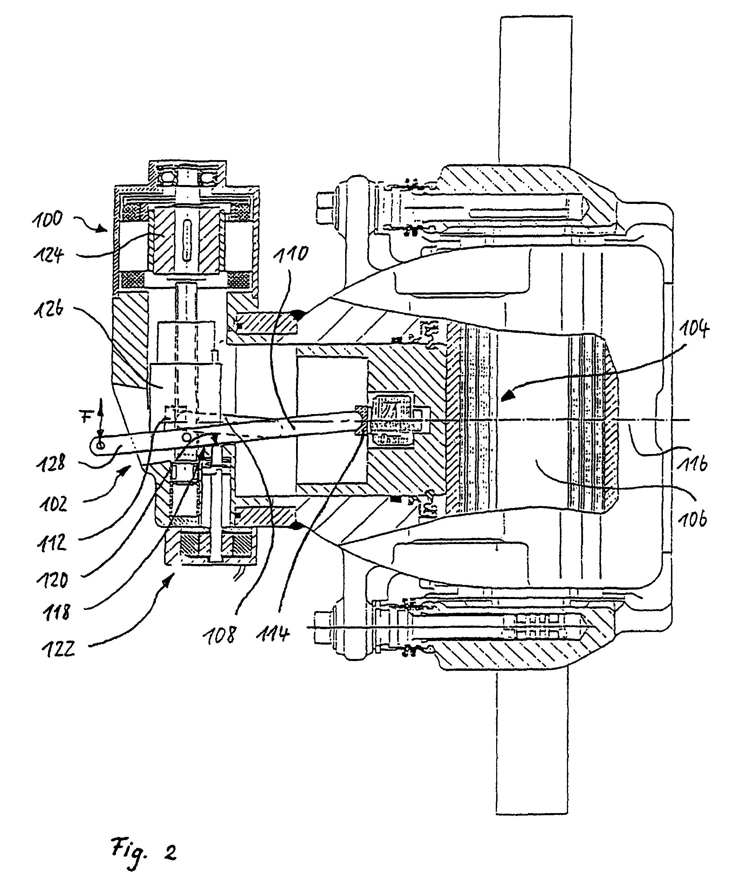

In Fig. 2 ist die Aktuatorenbaugruppe gemäß Fig. 1 in einem Zustand dargestellt, in dem sich die Hebelanordnung 102 in der Feststellbremsposition befindet.

In weiterer Ausgestaltung der Erfindung weißt die Hebelanordnung 102 einen Kraftumkehrpunkt auf, welcher auf einer Achse 116 liegt. Durch Bewegen der Hebelanordnung 102 über diesen Kraftumkehrpunkt hinaus, kann die Hebelanordnung aus dem Betriebsbremsbereich in eine Feststellbremsposition übergeführt werden. Zweckmäßig liegt die Hebelanordnung 102 in dieser Position an einem Anschlag 118 an, wodurch sie in diesem Zustand gehalten wird.

Die Hebelanordnung 102 ist in dieser Position selbsthemmend. Bei Rücknahme der eingeleiteten Antriebskraft wird das Reibelement 104 durch die Hebelanordnung 102 an einer Rückbewegung gehindert. Die Vorspannkraft des an die Bremsscheibe 106 gepreßten Reibelement 104 wird dadurch innerhalb der Bremse aufgenommen. Dies bedeutet einen erheblichen Vorteil, da in der Feststellbremsposition keine Kraft auf die Betätigungseinrichtung der Fahrzeugbremse wirkt. Die Betätigungseinrichtung der Fahrzeugbremse kann daher einfacher und kostengünstiger gestaltet werden. Indem die Feststellbremsposition unabhängig von Betätigungs- und Übertragungseinrichtungen der Fahrzeugbremse gehalten werden kann ist die Sicherheit der Bremsanlage erhöht.

Die Hebelanordnung 102 kann, wie in der bevorzugten Ausführungsform der Erfindung, mittels eines ortsfest am Gehäuse angeordneten mechanischen Anschlags oder ähnlicher Begrenzungsmittel einfach in der Feststellbremsposition gehalten werden.

Die von der Hebelanordnung gehaltene Vorspannkraft zwischen dem Reibelement 104 und der Bremsscheibe 106 ist dabei abhängig vom Abstand des Anschlages 118 von der Achse 116. Je kleiner dieser Abstand ist, um so größer ist die Vorspannkraft, welche durch die Hebelanordnung 102 auf das Reibelement 104 übertragen wird.

Optional kann zur Erhöhung der durch das Reibelement 104 auf die Bremsscheibe 106 aufgebrachten Kraft auch eine weitere hydraulische Übersetzungsstufe zwischen der Hebelanordnung 102 und dem Reibelement 104 angeordnet werden. Es können zwischen diesen beiden Elementen auch federnde Ausgleichsglieder, wie z.B. Wellenscheiben angeordnet sein, um das Bewegen der Hebelanordnung 102 über ihren Kraftumkehrpunkt hinaus zu erleichtern und eine Abnutzung des Reibelementes 104 auszugleichen.

Während in Fig. 1 und Fig. 2 eine besonders vorteilhafte Ausführungsform der Hebelanordnung 102 gezeigt ist, sind andere Hebelanordnungen denkbar. So kann z.B. in einer vereinfachten Ausführung der Arm 108 weggelassen und der Betriebsbremsbereich der Hebelanordnung 102 durch einen Anschlag am Arm 110 begrenzt sein.

Aufgrund gesetzlicher Sicherheitsvorschriften besteht die Forderung, daß die Fahrzeugbremse während des Betriebsbremszustandes nicht ohne Betätigung der Feststell-Bremsanlage in die Feststellbremsposition überführbar sein darf. Um dieser Forderung gerecht zu werden ist daher vorteilhaft ein zweiter bewegbarer Anschlag 120 vorgesehen, der die Hebelanordnung 102 wahlweise im Betriebsbremsbereich begrenzt, oder deren Bewegung in die Feststellbremsposition zuläßt. Dadurch wird ein unerwünschtes Eintreten der Fahrzeugbremse in die Feststellbremsposition verhindert.

Durch Koppelung eines solchen beweglichen Anschlages 120 mit der Hebelanordnung 102, können darüber hinaus sowohl den Betriebsbremsbereich begrenzende Druckkräfte, als auch Zugkräfte aufgebracht werden, welche die Hebelanordnung 102 aus der maximalen Position des Betriebsbremsbereiches in die Feststellposition überführen können. Die Hebelanordnung 102 kann so mittels des beweglichen Anschlages 120 in und/oder aus der Feststellbremsposition bewegt werden. Mit einer solchen Anordnung kann der gesetzlichen Forderung nach einer getrennten Betätigungseinrichtung der Betriebs- und Feststellbremse entsprochen werden.

Weiterhin kann eine elektrisch steuerbare Stelleinrichtung 122 den bewegbaren Anschlag 120 betätigen. Dabei ist es besonders vorteilhaft, wenn der zweite bewegbare Anschlag 120 in der den Betriebsbremsbereich begrenzenden Stellung stromlos stabil ist, damit während der Betriebsbremsfunktion ein minimaler Energieverbrauch erzielt wird. Hierfür kann beispielsweise ein bistabiler Umschalter eingesetzt werden, der nur beim Betätigen bestromt wird. Um besonders hohe Betätigungskräfte zu erzielen wird in der in Fig. 1 und Fig. 2 dargestellten Ausführungsform ein Drehmagnet als Stelleinrichtung verwendet.

Der Antrieb 100 umfaßt einen Elektromotor 124 mit einem Spindeltrieb 126. Eine solche Aktuatorenbaugruppe kann also in einer Fahrzeugbremse vom sogenannten Brake-by-Wire-Typ eingesetzt werden. Besondere Vorteile ergeben sich wenn der verwendete Spindeltrieb 126 selbstlösend ist, denn in einem solchen Fall kommt die selbstlösende Wirkung der Kniehebelanordnung 102 voll zur Geltung. Es ist jedoch zu beachten, daß die Selbsthemmnung der Hebelanordnung 102 auch erforderlich ist, wenn der Spindeltrieb 126 nicht selbstlösend ausgeführt ist, da die alleinige Selbsthemmung des Spindeltriebes 126 nicht ausreichen würde um die Feststellbremsfunktion auch unter wechselnden Umwelteinflüssen (z.B. Kälte-Wärme-Belastung) aufrecht zu erhalten. Bei Verwendung eines selbstlösenden Spindeltriebes 126 kann als Elektromotor 124 ein unidirektionaler Motor eingesetzt werden, welcher eine kompakte Bauform und einen geringen Stromverbrauch aufweist. Ein solcher Motor kann bei Niederspannung betrieben werden.

Die Hebelanordnung 102 umfaßt einen Hebel 128, der über eine Betätigungseinrichtung mit einer Kraft F beaufschlagt werden kann. Vorzugsweise ist der Hebel 128 dabei so gestaltet, daß er aus dem Gehäuse der Aktuatorenbaugruppe herausreicht.

Durch die verhältnismäßig große Länge des Hebels 128 kann aufgrund des Hebelgesetzes eine kleine Betätigungskraft F der Betätigungseinrichtung zu einer großen Ausgangskraft auf das Reibelement 104 übersetzt werden. Daher kann die Betätigungseinrichtung des Hebels 128 als mechanische Vorrichtung ausgeführt sein, welche manuell betätigt werden kann. Z.B. kann hierbei ein bekannter Handbremshebel mit einer Zugseilübertragung eingesetzt werden.

Um eine rein elektrisch betätigbare Fahrzeugbremse zu erhalten, ist es dennoch vorteilhaft, wenn die Betätigungseinrichtung des Hebels 128 einen elektrisch betätigbaren zweiten Antrieb umfaßt. Es ist auch eine Kombination einer manuell betätigbaren Betätigungseinrichtung des Hebels 128 mit einem elektrisch betätigbaren zweiten Antrieb sinnvoll. Bei Ausfall der Spannungsversorgung der elektrischen Antriebe kann über die manuelle Betätigung sowohl eine Notbrems- als auch eine Notlösefunktion der Fahrzeugbremse erzielt werden. Zur Vereinfachung einer solchen Notlösefunktion und als Low-Budget-Anwendung kann die Betätigungseinrichtung des Hebels 128 mechanisch mit dem zweiten bewegbaren Anschlag 120 gekoppelt sein, so daß der zweite bewegbare Anschlag 120 bei einer Bewegung des Hebels 128 mitbewegt und die Bewegung der Hebelanordnung 102 in die Feststellbremsposition zugelassen wird. Diese Kopplung kann mechanisch über eine zusätzliche Übersetzung erfolgen, damit auf den zweiten bewegbaren Anschlag 120 beim Überführen der Hebelanordnung 102 aus der Feststellbremsposition in den Betriebsbremsbereich eine erhöhte Kraft aufgebracht werden kann.

Entsprechend der oben aufgeführten Ausführungsformen kann die Hebelanordnung 102 mittels des Antriebes 100, des beweglichen Anschlages 120 oder der Betätigungseinrichtung des Hebels 128 vom Betriebsbremsbereich in die Feststellbremsposition bzw. von der Feststellbremsposition in den Betriebsbremsbereich bewegt werden. Um den gesetzlichen Forderungen nach einer getrennten Betätigung der Betriebsbremse, der Feststellbremse und einer Notbremse sowie der Notlösefunktion der Feststellbremse gerecht zu werden, sind wahlweise Kombinationen der genannten Antriebs- und Betätigungsmittel möglich. Bei Verwendung mehrerer elektrischer Antriebe ist es insbesondere vorteilhaft, daß die elektrisch steuerbare Stelleinrichtung des zweiten bewegbaren Anschlages 120 und die elektrischen Antriebe der Betätigungseinrichtung des Hebels 128 und des Spindeltriebes 126 wahlweise durch getrennte oder gemeinsame Spannungsquellen versorgt sind. Damit ist auch bei einer Bremsanlage eines Brake-by-Wire-Typs eine redundante Ausführung der Bremsfunktion gewährleistet.

Die beschriebenen Aktuatorenbaugruppen können in ihren verschiedenen Ausführungsformen innerhalb einer Fahrzeugbremse eingesetzt werden. Insbesondere ist es von Vorteil, dabei an jeder Radbremse mindestens einer Achse je eine Aktuatorenbaugruppe anzubringen, die jeweils einen Hebel 128 aufweisen und gemeinsam über eine Betätigungseinrichtung mit der Kraft F betätigt werden können.

## Patentansprüche

1. Aktuatorenbaugruppe für eine Fahrzeugbremse mit einem Antrieb (100), der mit einer Eingangsseite einer Hebelanordnung (102) verbunden ist, wobei eine Ausgangsseite der Hebelanordnung zur Betätigung wenigstens eines Reibelementes (104) der Fahrzeugbremse eingerichtet ist, **dadurch gekennzeichnet, daß** die
Hebelanordnung (102) aus einem Betriebsbremsbereich, in dem sie selbstlösend ist, über ihren Kraftumkehrpunkt hinaus in eine Feststellbremsposition überführbar ist, in der sie selbsthemmend ist.

2. Aktuatorenbaugruppe nach Anspruch 1, **dadurch gekennzeichnet, daß** die Hebelanordnung (102) in der Feststellbremsposition an einem Anschlag (118) anliegt.

3. Aktuatorenbaugruppe nach Anspruch 1 oder 2, **dadurch gekennzeichnet, daß** ein zweiter bewegbarer Anschlag (120) die Hebelanordnung (102) wahlweise im Betriebsbremsbereich begrenzt, oder deren Bewegung in die Feststellbremsposition zuläßt.

4. Aktuatorenbaugruppe nach Anspruch 3, **dadurch gekennzeichnet, daß** der zweite bewegbare Anschlag (120) mit der Hebelanordnung (102) gekoppelt ist, wobei Zug- und Druckkräfte übertragen werden können.

5. Aktuatorenbaugruppe nach Anspruch 3 oder 4, **dadurch gekennzeichnet, daß** eine elektrisch steuerbare Stelleinrichtung (122) den zweiten bewegbaren Anschlag (120) betätigt.

6. Aktuatorenbaugruppe nach Anspruch 5, **dadurch gekennzeichnet, daß** der zweite bewegbare Anschlag (120) in der den Betriebsbremsbereich begrenzenden Stellung stromlos stabil ist.

7. Aktuatorenbaugruppe nach einem der vorhergehenden Ansprüche, **dadurch gekennzeichnet, daß** der Antrieb (100) einen Elektromotor (124) mit einem Spindeltrieb (126) umfaßt.

8. Aktuatorenbaugruppe nach Anspruch 7, **dadurch gekennzeichnet, daß** der Spindeltrieb (126) selbstlösend ist.

9. Aktuatorenbaugruppe nach Anspruch 8, **dadurch gekennzeichnet, daß** der Elektromotor (124) ein unidirektionaler Motor ist.

10. Aktuatorenbaugruppe nach einem der vorhergehenden Ansprüche, **dadurch gekennzeichnet, daß** die Hebelanordnung (102) einen Hebel (128) umfaßt, der über eine Betätigungseinrichtung mit einer Kraft (F) beaufschlagt werden kann.

11. Aktuatorenbaugruppe nach Anspruch 10, **dadurch gekennzeichnet, daß** die Betätigungseinrichtung des Hebels (128) als mechanische Vorrichtung ausgeführt ist, die manuell betätigt werden kann.

12. Aktuatorenbaugruppe nach Anspruch 10 oder 11, **dadurch gekennzeichnet, daß** die Betätigungseinrichtung des Hebels (128) einen elektrisch betätigbaren zweiten Antrieb umfaßt.

13. Aktuatorenbaugruppe nach einem der Ansprüche 10 bis 12, soweit dieser auf Anspruch 3 zurückbezogen ist, **dadurch gekennzeichnet, daß** die Betätigungseinrichtung des Hebels (128) mechanisch mit dem zweiten bewegbaren Anschlag (120) gekoppelt ist.

14. Aktuatorenbaugruppe nach einem der Ansprüche 12 und 13, soweit dieser auf die Ansprüche 12, 7 und/oder 5 zurückbezogen ist, **dadurch gekennzeichnet, daß** die elektrisch steuerbare Stelleinrichtung des zweiten bewegbaren Anschlags (120), und die elektrischen Antriebe der Betätigungseinrichtung des Hebels (128) und des Spindeltriebes (126) wahlweise durch getrennte oder gemeinsame Spannungsquellen versorgt sind.

15. Aktuatorenbaugruppe nach einem der vorhergehenden Ansprüche, **dadurch gekennzeichnet, daß** die Hebelanordnung zwei Arme (108, 110) umfaßt, von denen der erste Arm (108) halb so lang wie der zweite Arm (110) ist, wobei der erste Arm (108) an seinem erstes Ende in der Mitte des zweiten Armes (110) mit diesem gelenkig verbunden und mit seinem zweiten Ende in einem Festlager (112) abgestützt ist, und der zweite Arm (110) an seinem ersten Ende über ein Loslager (114) mit dem axial verschiebbaren Reibelement (104) verbunden ist, und an seinem zweiten Ende durch den Antrieb (100) wahlweise mit einer in Richtung auf das Festlager (112) wirkenden Kraft belastet ist.

16. Fahrzeugbremse **gekennzeichnet durch** mindestens eine Aktuatorenbaugruppe nach einem der vorhergehenden Ansprüche.

17. Fahrzeugbremse nach Anspruch 16, **dadurch gekennzeichnet daß** an jeder Radbremse mindestens einer Achse je eine Aktuatorenbaugruppe nach einem der Ansprüche 10 bis 15, soweit dieser auf Anspruch 10 zurückbezogen ist, angeordnet ist, wobei die Hebel (128) der Aktuatorenbaugruppen mit einer gemeinsamen Betätigungseinrichtung mit der Kraft (F) betätigt werden können.

## Claims

1. An actuator subassembly for a vehicle brake, comprising a drive (100) which is connected to an input side of a lever arrangement (102), wherein an output side of the lever arrangement is adapted to operate at least one friction element (104) of the vehicle brake, **characterised in that** the
lever arrangement (102) can be changed over from a service brake region, in which it is self-releasing, beyond its force reversal point into a parking brake position, in which it is self-locking.

2. The actuator subassembly according to Claim 1, **characterised in that** the lever arrangement (102) rests against a stop (118) in the parking brake position.

3. The actuator subassembly according to Claim 1 or 2, **characterised in that** a second mobile stop (120) either confines the lever arrangement (102) in the service brake region or allows it to move into the parking brake position.

4. The actuator subassembly according to Claim 3, **characterised in that** the second mobile stop (120) is coupled to the lever arrangement (102), wherein tensile and compressive forces can be transmitted.

5. The actuator subassembly according to Claim 3 or 4, **characterised in that** an electrically controllable actuating device (122) operates the second mobile stop (120).

6. The actuator subassembly according to Claim 5, **characterised in that** the second mobile stop (120) is stable in the absence of current in the position which confines the service brake region.

7. The actuator subassembly according to one of the preceding Claims, **characterised in that** the drive (100) comprises an electric motor (124) with a spindle drive (126).

8. The actuator subassembly according to Claim 7, **characterised in that** the spindle drive (126) is self-releasing.

9. The actuator subassembly according to Claim 8, **characterised in that** the electric motor (124) is a unidirectional motor.

10. The actuator subassembly according to one of the preceding Claims, **characterised in that** the lever arrangement (102) comprises a lever (128) on which a force (F) can act via an operating device.

11. The actuator subassembly according to Claim 10, **characterised in that** the operating device of the lever (128) is constructed as a mechanical appliance which can be manually operated.

12. The actuator subassembly according to Claim 10 or 11, **characterised in that** the operating device of the lever (128) comprises an electrically operable second drive.

13. The actuator subassembly according to one of Claims 10 to 12, in so far as this refers back to Claim 3, **characterised in that** the operating device of the lever (128) is mechanically coupled to the second mobile stop (120).

14. The actuator subassembly according to one of Claims 12 and 13, in so far as this refers back to Claims 12, 7 and/or 5, **characterised in that** the electrically controllable actuating device of the second mobile stop (120), and the electric drives of the operating device of the lever (128) and of the spindle drive (126) are supplied optionally by either separate or common voltage sources.

15. The actuator subassembly according to one of the preceding Claims, **characterised in that** the lever arrangement comprises two arms (108, 110), the first arm (108) of which is half as long as the second arm (110), wherein the first arm (108) is hinged at its first end to the second arm (110) in the centre of the latter and is supported by way of its second end in a locating bearing (112), and the second arm (110) is connected at its first end via a movable bearing (114) to the axially displaceable friction element (104) and is optionally loaded at its second end via the drive (100) with a force acting in the direction of the locating bearing (112).

16. A vehicle brake, **characterised by** at least one actuator subassembly according to one of the preceding claims.

17. The vehicle brake according to Claim 16, **characterised in that** one actuator subassembly according to one of Claims 10 to 15, in so far as this refers back to Claim 10, is disposed on each wheel brake of at least one axle, wherein the levers (128) of the actuator subassemblies can be operated by a common operating device with the force (F).

## Revendications

1. Assemblage actionneur pour un frein de véhicule comportant un dispositif d'entrainement (100) qui est raccordé à un côté d'entrée d'un dispositif à levier (102), un côté de sortie du dispositif à levier étant aménagé pour l'actionnement d'au moins un élément de friction (104) du frein de véhicule, **caractérisé en ce que** le dispositif à levier (102) peut passer d'une zone de freinage de service, dans laquelle il se débloque automatiquement, au-delà de son point d'inversion de force à une position de freinage de stationnement, dans laquelle il est autobloquant.

2. Assemblage actionneur selon la revendication 1, **caractérisé en ce que** le dispositif à levier (102) s'applique sur une butée (118) dans la position de freinage de stationnement.

3. Assemblage actionneur selon la revendication 1 ou 2, **caractérisé en ce qu'**une seconde butée mobile (120) au choix limite le dispositif à levier (102) dans la zone de freinage de service, ou permet son déplacement dans la position de freinage de stationnement.

4. Assemblage actionneur selon la revendication 3, **caractérisé en ce que** la seconde butée mobile (120) est couplée au dispositif à levier (102) de sorte que des forces de traction et de pression peuvent être transmises.

5. Assemblage actionneur selon la revendication 3 ou 4, **caractérisé en ce qu'**un équipement de positionnement (122) pouvant être commandé électriquement actionne la seconde butée mobile (120).

6. Assemblage actionneur selon la revendication 5, **caractérisé en ce que** la seconde butée mobile (120) est stable dans la position délimitant la zone de freinage de service en l'absence de courant.

7. Assemblage actionneur selon l'une quelconque des revendications précédentes, **caractérisé en ce que** le dispositif d'entraînement (100) comporte un moteur électrique (124) avec une transmission à vis (126).

8. Assemblage actionneur selon la revendication 7, **caractérisé en ce que** la transmission à vis (126) se débloque automatiquement.

9. Assemblage actionneur selon la revendication 8, **caractérisé en ce que** le moteur électrique (124) est un moteur unidirectionnel.

10. Assemblage actionneur selon l'une quelconque des revendications précédentes, **caractérisé en ce que** le dispositif à levier (102) comporte un levier (128) qui peut être sollicité par une force (F) via un équipement d'actionnement.

11. Assemblage actionneur selon la revendication 10, **caractérisé en ce que** l'équipement d'actionnement du levier (128) est exécuté comme dispositif mécanique pouvant être actionné manuellement.

12. Assemblage actionneur selon la revendication 10 ou 11, **caractérisé en ce que** l'équipement d'actionnement du levier (128) comporte un deuxième dispositif d'entraïnement pouvant être actionné électriquement.

13. Assemblage actionneur selon l'une quelconque des revendications 10 à 12, pour autant que celle-ci dépend de la revendication 3, **caractérisé en ce que** l'équipement d'actionnement du levier (128) est couplé mécaniquement à la seconde butée mobile (120).

14. Assemblage actionneur selon l'une quelconque des revendications 12 et 13, pour autant que celle-ci dépend des revendications 12, 7 et/ou 5, **caractérisé en ce que** l'équipement de positionnement de la seconde butée mobile (120), pouvant être commandé électriquement et les dispositifs d'entraînement électriques de l'équipement d'actionnement du levier (128) et de la transmission à vis (126) sont alimentés au choix par des sources de tension séparées ou communes.

15. Assemblage actionneur selon l'une quelconque des revendications précédentes, **caractérisée en ce que** le dispositif à levier comporte deux bras (108, 110) dont le premier bras (108) est moitié moins long que le second bras (110), le premier bras (108) étant raccordé par articulation, à sa première extrémité, au second bras (110), au centre de celui-ci, et s'appuyant avec sa deuxième extrémité dans un support fixe (112) et dont le second bras (110) est raccordé, à sa première extrémité, via un support libre (114) à l'élément de friction (104) pouvant se déplacer axialement et est sollicité à sa deuxième extrémité par le dispositif d'entraînement (100) au choix avec une force agissant dans la direction du support fixe (112).

16. Frein de véhicule **caractérisé par** au moins un assemblage actionneur selon l'une quelconque des revendications précédentes.

17. Frein de véhicule selon la revendication 16, **caractérisé en ce que** sur chaque frein de roue d'au moins un essieu est disposé à chaque fois un assemblage actionneur selon l'une quelconque des revendications 10 à 15, pour autant que celle-ci dépend de la revendication 10, le levier (128) des assemblages actionneurs pouvant être commandé au moyen de la force (F) par un équipement commun d'actionnement.
